# EUROPÄISCHE PATENTANMELDUNG

(11) **EP 0 887 473 A2**
(43) Veröffentlichungstag der Anmeldung: **30.12.1998**
(21) Anmeldenummer: 98250238.7
(22) Anmeldetag: 26.06.1998
(51) Int. Cl.: E02B 8/02, E03F 5/14

(54) **Vorrichtung zur Gewässerreinigung**

(30) Priorität: 26.06.1997 DE 19727954; 27.04.1998 DE 19819878
(71) Anmelder: August Frebe GmbH, 14913 Jüterbog (DE)
(72) Erfinder:
(74) Vertreter: Hengelhaupt, Jürgen, Dipl.-Ing.

(57) **Zusammenfassung**

Die Erfindung bezieht sich auf eine Vorrichtung zur Gewässerreinigung, insbesondere Abwasserreinigung, mit nach dem Paternostersystem umlaufender mit Siebblechen bestückter Siebkette zur Aufnahme und zum Abtransport von im Wasser befindlichem Rechengut.

Die Aufgabe der Erfindung, eine Vorrichtung zur Gewässerreinigung in Form eines Rechens zu entwickeln, welche eine verbesserte Kraftübertragung über die Siebkette bei optimaler Siebkettenlänge ermöglicht, eine hohe Stabilität aufweist, auch für größere Gerinnebreiten einsetzbar ist, hohe Filterleistungen gewährleistet sowie Verschmutzungen der Anlage weitgehend verhindert, wird dadurch gelöst, daß die Siebkette 16 über einen Aufwärtsumlenkpunkt 17 derart geführt wird, daß zwischen dem ersten Kettenbereich 16a und dem zweiten Kettenbereich 16b ein Umlenkwinkel im Bereich von 30° bis 50°, vorzugsweise von 40° gebildet wird.

## Beschreibung

Die Erfindung betrifft eine Vorrichtung zur Gewässerreinigung, insbesondere Abwasserreinigung, mit nach dem Paternostersystem umlaufender mit Siebblechen bestückter Siebkette zur Aufnahme und zum Abtransport von im Wasser befindlichem Rechengut. Ein bevorzugtes Anwendungsgebiet der Erfindung sind kommunale und industrielle Kläranlagen.

Es ist bekannt, zur Absiebung von gröberen Abwasserinhaltsstoffen sogenannte Rechen bzw. Fein- oder Feinstrechen zu verwenden.

Mit der DE 42 00 366 C2 wird ein Filterrechen beschrieben, welcher Filterelemente aufweist, die schwenkbar an dem umlaufenden Förderglied befestigt sind und bei dem an dem umlaufenden Förderglied zusätzlich feststehende Filterelemente derart vorgesehen sind, daß die schwenkbaren und die feststehenden Filterelemente an dem Förderglied abwechselnd hintereinander angeordnet sind und die schwenkbaren und die feststehenden Filterelemente auf der oberstromigen Seite des Filterrechens eine zum umlaufenden Förderglied im wesentlichen parallele, bis zur Gewässersohle geschlossen verlaufende Filterfläche bilden. Nachteilig an dieser Lösung ist, daß dieser Filterrechen nur für begrenzte Gerinnebreiten einsetzbar ist.

Nachteilig bei diesen bekannten Lösungen ist weiterhin, daß bereits erfaßtes Rechengut durch die lange steile Kettenführung wieder in den Kanal zurückfällt, Kraftübertragung und Kettenlänge nicht optimal gestaltet sind und das Gehäuse Ansatzpunkte für Verschmutzungen bietet.

Es ist Aufgabe der Erfindung, eine Vorrichtung zur Gewässerreinigung in Form eines Rechens zu entwickeln, welche eine verbesserte Kraftübertragung über die Siebkette bei optimaler Siebkettenlänge ermöglicht, eine hohe Stabilität aufweist, auch für größere Gerinnebreiten einsetzbar ist, hohe Filterleistungen gewährleistet sowie Verschmutzungen der Anlage weitgehend verhindert.

Diese Aufgabe wird erfindungsgemäß gelöst durch die Merkmale des Anspruches 1. Zweckmäßige Ausgestaltungen der Erfindung sind in den Unteransprüchen beschrieben.

Eine effektive Reinigung des Abwassers von gröberen Bestandteilen wird durch einen Fein-/Feinstrechen ermöglicht, bei welchem die Siebkette über einen Aufwärtsumlenkpunkt geführt wird derart, daß zwischen den Kettenbereichen ein Umlenkwinkel im Bereich von 30° bis 50°, vorzugsweise von 40° gebildet wird.

Ein besonderer Vorteil der kammartig ausgebildeten Siebbleche besteht in der problemlosen, mit wenig Aufwand zu erzielenden, rückstandsfreien Reinigung der Siebbleche zum Beispiel mittels Bürsten.

Bei einer Bestückung der Siebkette nur mit kammartig ausgebildeten Siebblechen klappen bei der Bewegung der Siebkette im Abwasserstrom im Abwärtstrum alle Siebbleche auf, so daß eine weitere Verbesserung der hydraulischen Verhältnisse des Rechens erzielt wird.

Ein besonderer Vorteil der Erfindung besteht auch darin, daß mit dem Fein-/Feinstrechen durch Realisierung einer größeren Gerinnebreite bei hoher Stabilität der gerätetechnischen Vorrichtung eine höhere Effektivität der Abwasserreinigung erzielt werden kann.

In einer Ausführungsform der Erfindung wird die Siebkette aus einzelnen zwischen den Führungsrohren angeordneten gelochten Siebblechen gebildet, die in ihrer Reihenfolge abwechselnd entweder beidseitig oder nur einseitig mit den Führungsrohren derart verbunden sind, daß abwechselnd feststehend und beweglich angeordnete Siebbleche entstehen.

Die Siebbleche, insbesondere die als Lochblech ausgebildeten Siebbleche, sind gewölbt ausgebildet und/oder mit mindestens einer in Längsrichtung verlaufenden Sicke versehen.

Eine zusätzliche Stabilisierung resultiert daraus, daß an den Führungsrohren Versteifungen angeordnet sind, welche in Längsrichtung verlaufen und aus Stahlprofilen, insbesondere aus Flachstahlstreifen bestehen.

Nach Bedarf können unterschiedlichste Kombinationen von gelochten und von kammartig ausgebildeten Siebblechen an der Siebkette angeordnet sein, zum Beispiel alternierend ein gelochtes/geschlitztes/gesicktes und ein kammartig ausgebildetes Siebblech.

Die Erfindung soll nachstehend anhand von Ausführungsbeispielen eines Feinrechens und von Siebblechen näher erläutert werden. In der zugehörigen Zeichnung zeigen:
- Fig. 1: eine Prinzipdarstellung eines Feinrechens gemäß dem bekannten Stand der Technik
- Fig. 2: eine Prinzipdarstellung eines Feinrechens mit kleinem Umlenkwinkel,
- Fig. 3: eine Prinzipdarstellung eines Feinrechen-Gehäuses mit schräger Auswurföffnung und geneigter Gehäuseabdeckung,
- Fig. 4: eine erste Ausführungsform eines Siebbleches,
- Fig. 5: eine zweite Ausführungsform des Siebbleches,
- Fig. 6: die Draufsicht auf miteinander verbundene Siebbleche gemäß der Darstellung in Fig. 5,
- Fig. 7: die Seitenansicht der Siebbleche in ihrer Anordnung gemäß der Fig. 6 und
- Fig. 8: eine Teildarstellung der Siebblechkette mit gelochten gewölbten und gesickten Siebblechstreifen.

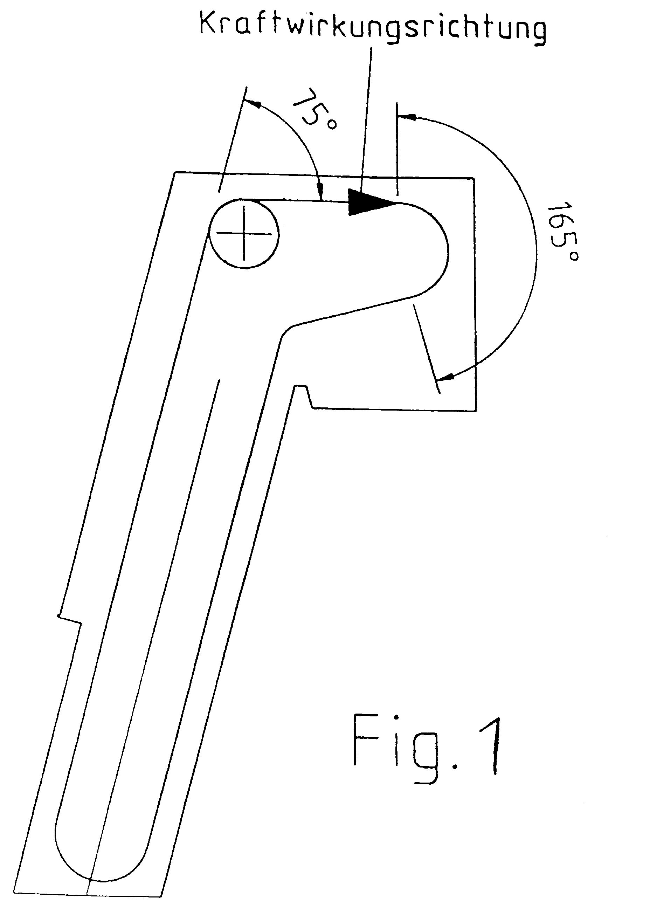

Ein Fein- bzw. Feinstrechen in bisher bekannter Ausführung ist in Figur 1 dargestellt. Der Sinn dieser Anordnung besteht darin, das im Abwasser enthaltene Rechengut möglichst schnell nach oben hin zu entnehmen und in einem Container oder nachfolgende Förderorgane abzuwerfen.

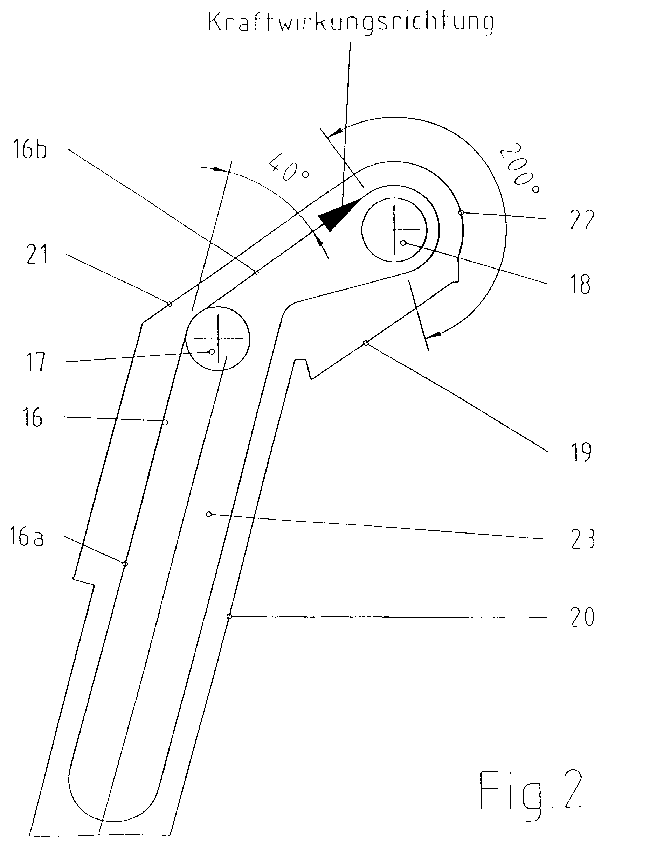

Die Fig. 2 zeigt einen Fein- bzw. Feinstrechen zur Abwasserreinigung mit nach dem Paternostersystem umlaufender Siebkette 16 zur Aufnahme und zum Abtransport von in Abwasser befindlichem Rechengut, deren Filterelemente nicht in den von der Kette 16 umschlossenen Innenraum 23 hineinragen, der dadurch gekennzeichnet ist, daß die Siebkette 16 über einen Aufwärtsumlenkpunkt 17 derart geführt wird, daß zwischen dem Kettenbereich 16a und dem Kettenbereich 16b ein Umlenkwinkel im Bereich von 30° bis 50°, vorzugsweise von 40° gebildet wird.

Aus dem kleineren Umlenkwinkel resultiert eine günstigere Kraftübertragung. Weitere Vorteile sind die Verkürzung der umlaufenden Siebkette 16 und damit die Reduzierung der Herstellungskosten der Anlage, die Verkürzung der steilen Siebettenfläche (60-85°) und damit die Reduzierung der Gefahr, daß bereits erfaßtes Rechengut wieder in den Kanal zurückfällt, die Vergrößerung des Umschlingungswinkels am Antriebskettenrad 18 und die Verkleinerung des Umlenkwinkels am Aufwärtsumlenkpunkt 17 und damit weniger Reibungsverluste und weniger Verschleiß sowie die Verkürzung der Abdeckung und damit Verringerung deren Masse und Verbesserung der Handhabung.

Trotz der vorbeschriebenen Verkürzung der steilen Siebkettenfläche (60-85°) bleibt bei der beschriebenen Anordnung die Abwurfhöhe für das Rechengut erhalten, so daß weiterhin Rechengutpressen, Container oder Fördereinrichtungen unter der Auswurföffnung des Rechengehäuses plaziert werden können.

Der Umschlingungswinkel am Antriebskettenrad 18 liegt im Bereich von 180° bis 220° und beträgt im vorliegenden Ausführungsbeispiel 200°.

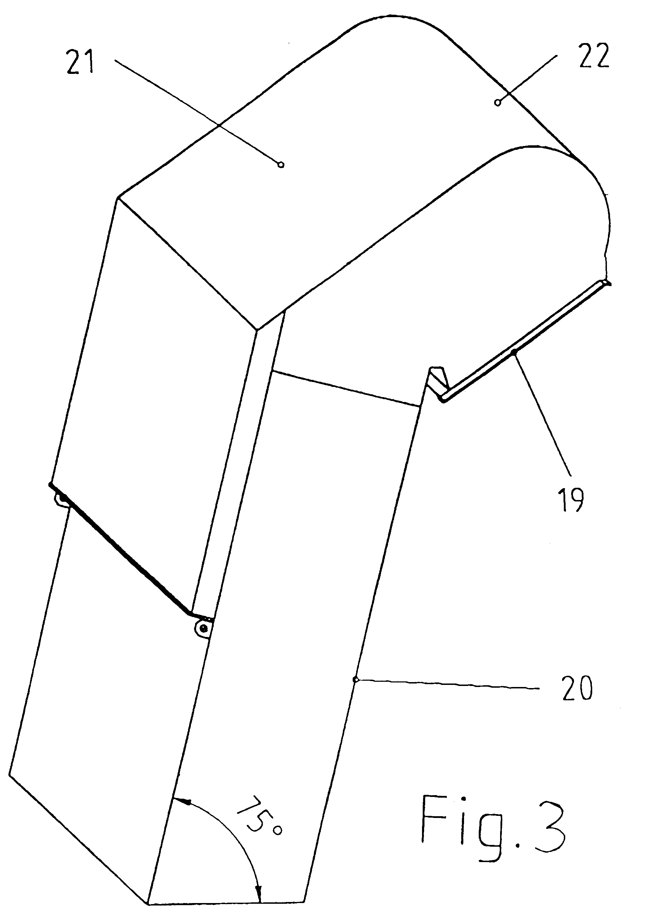

Das Rechengehäuse 20 weist, wie in den Fig. 2 und 3 zu ersehen ist, eine schräg ausgebildete Auswurföffnung 19 auf. Die Rechengehäuseabdeckung 21 oberhalb des Kettenbereiches 16b ist geneigt ausgebildet. Durch eine abgerundete oder mehreckige Gestaltung des oberen Bereiches 22 des Rechengehäuses 20 wird ein Festsetzen von Ablagerungen weitgehend verhindert.

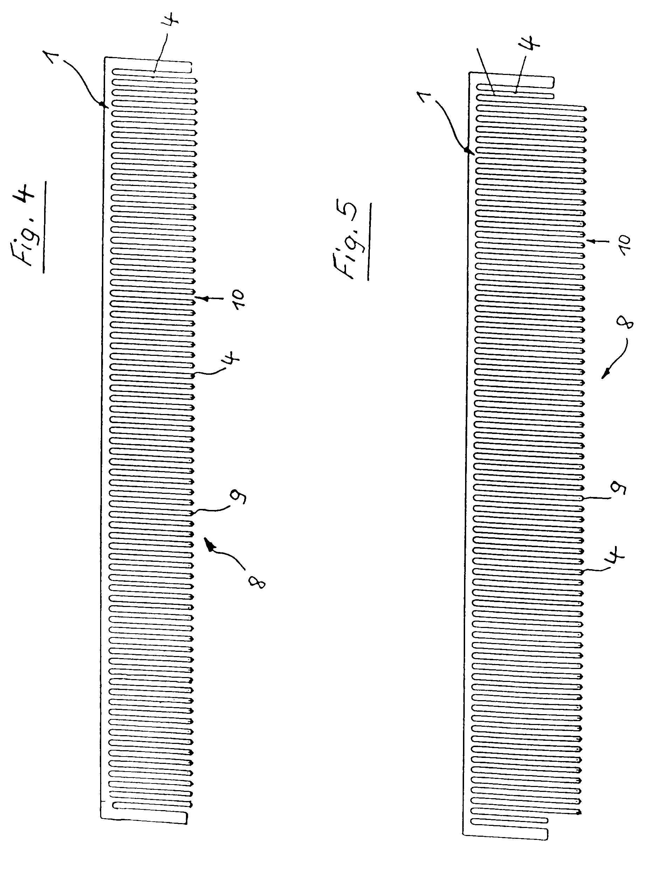

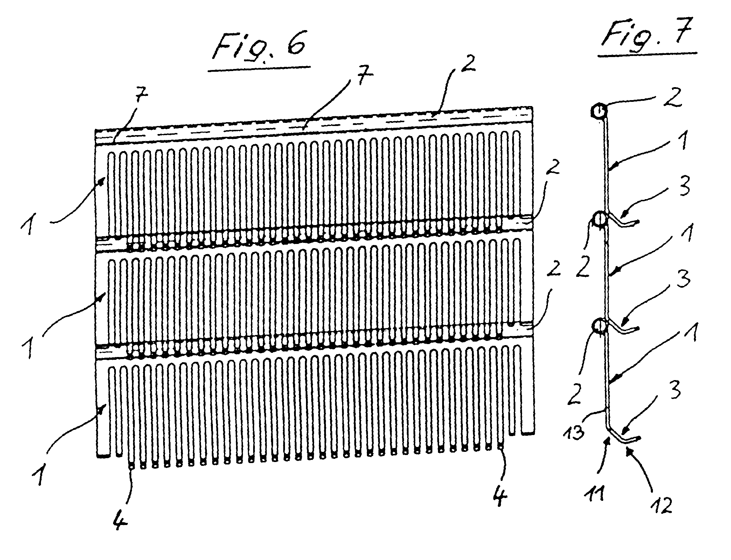

In den Figuren 4 bis 7 sind Ausführungsformen der Siebbleche 1 dargestellt, wie sie an der Siebkette 16 nach Fig. 2 angeordnet sind. Entsprechend der Darstellung in den Fig. 4 bis 7 sind die jeweiligen Siebbleche 1 kammartig ausgebildet.

Die den Kamm 8 bildenden Zinken 4 sind vorzugsweise mit einer Spitze 9 versehen. Der Zwischenraum 10 zwischen den Zinken 4 ist größer, höchstens gleich der Zinkenbreite gewählt.

Die Ausführungsformen nach den Fig. 4 und 5 bis 7 weisen ein über die gesamte Länge des Siebbleches 1 angeschweißtes Führungsrohr 2 für die Aufnahme eines an der umlaufenden Siebkette befestigten durchgehenden Bolzens auf (nicht dargestellt).

In der zweiten Auführungsform der Siebbleche 1 nach den Fig. 5 bis 7 ist eine zweifach abgekantete Verlängerung 3 der einzelnen Zinken 4 (Harkenstäbe) des Siebbleches 1 vorgesehen, die zur Förderung von gröberen Stoffen dient. Die erste Abkantung 11 ist zum geraden Teil 13 der Zinke 4 im Winkel von 45°, die zweite Abkantung 12 im Winkel von 60° gewählt.

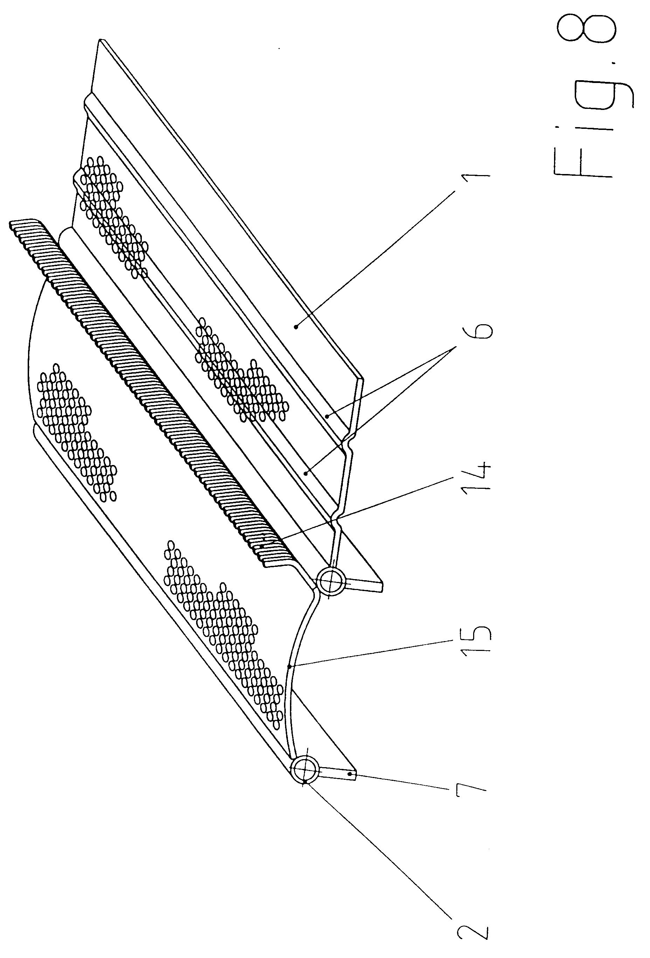

Der in der Fig. 8 dargestellte Ausschnitt aus einer Siebkette 16 zeigt als Lochblech mit einer Überwölbung 15 ausgebildete Siebbleche 1, welche zwischen Führungsrohren 2 angeordnet sind.

Die Siebbleche 1 sind entweder über die gesamte Breite 5 gewölbt ausgebildet oder mit zwei Sicken 6 versehen, wobei die Wölbung 15 konkav geformt ist und die zwei Sicken 6 in Längsrichtung der Siebbleche 1 verlaufen. Die umlaufende Siebkette 16 des Feinrechens ist abwechselnd mit feststehenden und beweglichen Siebblechen 1 bestückt.

Die entsprechend den Fig. 4 bis 7 kammartig ausgebildeten Siebbleche 1 klappen bei der Bewegung der Siebkette 16 im Abwasserstrom im Abwärtstrum auf und ermöglichen eine noch weitergehende Verbesserung der hydraulischen Verhältnisse des Rechens. Gleichzeitig wird durch das Aufklappen der Siebelemente die Ansammlung von Grobstoffen zwischen Aufwärts- und Abwärtstrum verhindert, so daß Geruchsbelästigungen aus möglichen Faul- oder Gärungsprozessen vermieden werden. Im unteren Bereich des Abwärtstrums werden alle Siebbleche 1 durch eine Zwangsführung (nicht dargestellt) zum Zuklappen gebracht, so daß beim Erreichen der Gerinnesohle eine geschlossene Siebfläche aller Siebbleche l zur Verfügung steht.

Eine bevorzugte Ausführungsform der Erfindung wird dadurch realisiert, daß die feststehend angeordneten, nach Fig. 8 als Lochblech ausgebildeten Siebbleche 1 konkav gewölbt ausgebildet sind und die beweglich angeordneten Siebbleche 1 zwei in Längsrichtung der Siebbleche 1 verlaufende Sicken 6 aufweisen. Zur weiteren Erhöhung der Stabilität der Fein-/Feinstrechenanordnung sind an den Führungsrohren 2 Versteifungen 7 angeordnet, welche zum Beispiel aus angeschweißten Flachstahlstreifen bestehen. Zur besseren Erfassung von groben Verunreinigungen sind an den Siebblechen 1 nach außen gerichtete Harkenstäbe 14 angeordnet.

Es sind unterschiedliche Kombinationen der Anordnung von kammartig ausgebildeten Siebblechen 1 und von gelochten Siebblechen 1 und auch von gewölbten und/oder mit Sicken 6 versehenen Siebblechen 1 sinnvoll ausführbar. So ist u.a. eine Kombination von abwechselnd gelochten und gewölbten/gesickten und von kammartig ausgebildeten Siebblechen 1 möglich, so daß sich die Vorteile beider Ausführungsformen der Siebbleche 1 summieren.

Die Erfindung ist nicht auf die hier beschriebenen Ausführungsbeispiele beschränkt. Vielmehr ist es möglich, durch Kombination der Merkmale weitere Ausführungsbeispiele zu realisieren, ohne den Rahmen der Erfindung zu verlassen.

### Bezugszeichenliste

- 1: Siebblech
- 2: Führungsrohr
- 3: Verlängerung
- 4: Zinken
- 5: Breite
- 6: Sicken
- 7: Versteifung
- 8: Kamm
- 9: Spitze
- 10: Zwischenraum
- 11: Abkantung
- 12: Abkantung
- 13: gerader Teil
- 14: Harkenstab
- 15: Überwölbung
- 16: Siebkette
- 16a: Kettenbereich
- 16b: Kettenbereich
- 17: Aufwärtsumlenkpunkt
- 18: Antriebskettenrad
- 19: Auswurföffnung
- 20: Rechengehäuse
- 21: Rechengehäuseabdeckung
- 22: oberer Bereich
- 23: Innenraum

## Patentansprüche

1. Vorrichtung zur Gewässerreinigung, insbesondere Abwasserreinigung, mit nach dem Paternostersystem umlaufender mit Siebblechen bestückter Siebkette zur Aufnahme und zum Abtransport von im Wasser befindlichem Rechengut,
dadurch gekennzeichnet, daß
die Siebkette (16) über einen Aufwärtsumlenkpunkt (17) derart geführt wird, daß zwischen dem ersten Kettenbereich (16a) und dem Zweiten Kettenbereich (16b) ein Umlenkwinkel im Bereich von 30° bis 50°, vorzugsweise von 40° gebildet wird.

2. Vorrichtung nach Anspruch 1,
dadurch gekennzeichnet, daß
der Umschlingungswinkel am Antriebskettenrad (18) im Bereich von 180° bis 220° liegt und vorzugsweise 200° beträgt.

3. Vorrichtung nach Anspruch 1,
dadurch gekennzeichnet, daß
die Auswurföffnung (19) des Rechengehäuses (20) geneigt ausgebildet ist.

4. Vorrichtung nach Anspruch 3,
dadurch gekennzeichnet, daß
die Rechengehäuseabdeckung (21) oberhalb des zweiten Kettenbereiches (16b) geneigt ausgebildet ist.

5. Vorrichtung nach Anspruch 3,
dadurch gekennzeichnet, daß
das Rechengehäuse (20) im oberen Bereich (22) abgerundet oder mehrkantig ausgebildet ist.

6. Vorrichtung nach Anspruch 1,
dadurch gekennzeichnet, daß
die Siebkette (16) mit einzelnen kammartig ausgebildeten Siebblechen (1) bestückt ist.

7. Vorrichtung nach Anspruch 1,
dadurch gekennzeichnet, daß
die Siebkette (16) mit als Lochblech ausgebildeten Siebblechen (1) bestückt ist, wobei die Siebbleche in ihrer Reihenfolge abwechselnd entweder beidseitig oder nur einseitig über ihre über die gesamte Länge angebrachten Führungsrohre (2) mit an der umlaufenden Siebkette (16) befestigten durchgehenden Bolzen derart verbunden sind, daß abwechselnd feststehende und beweglich angeordnete Siebbleche (1) entstehen.

8. Vorrichtung nach Anspruch 7,
dadurch gekennzeichnet, daß
die Siebbleche (1) gewölbt ausgebildet und/oder mit mindestens einer in Längsrichtung verlaufenden Sicke (6) versehen sind.

9. Vorrichtung nach den Ansprüchen 6 oder 7,
dadurch gekennzeichnet, daß
an den Führungsrohren (2) Versteifungen (7) angeordnet sind.

10. Vorrichtung nach den Ansprüchen 7 und 8,
dadurch gekennzeichnet, daß
an den Siebblechen (1) nach außen gerichtete Harkenstäbe (14) angeordnet sind.

11. Vorrichtung nach Anspruch 1,
dadurch gekennzeichnet, daß
die Siebbleche (1) im Aufwärtstrum eine geschlossene Siebfläche im Abwasserzustrom bilden und im Abwärtstrum die beweglich angeordneten Siebbleche aufklappen und entsprechende Öffnungen in der Siebfläche erzeugen.

12. Vorrichtung nach Anspruch 1,
dadurch gekennzeichnet,
daß die Siebkette (16) in beliebiger Kombination und Reihenfolge mit den kammartig ausgebildeten Siebblechen (1) und mit den als Lochblech ausgebildeten Siebblechen (1) bestückt ist.
